# EUROPEAN PATENT APPLICATION

(11) **EP 1 661 461 A1**
(43) Date of publication of application: **31.05.2006**
(21) Application number: 04425892.9
(22) Date of filing: 26.11.2004
(51) Int. Cl.: A21C 1/02, A21C 1/14, A21C 1/10, B01F 7/30

(54) **Kneading machine**

(71) Applicant: Sigma S.p.A., 25030 Torbole Casaglia (Brescia) (IT)
(72) Inventor: Gnocchi, Luciano, 25088 Toscolano Maderno (Brescia) (IT)
(74) Representative: Crippa, Paolo Ernesto

(57) **Abstract**

The present invention relates to a kneading machine (30), such as a kneading machine for dough for bread making, pizza and the like, carrying a kneading tool (3) moved by planetary motion by a gearing system and immersed at least partly in a fixed bowl (2) containing the dough.

## Description

The present invention relates to a kneading machine, such as a kneading machine for dough for bread making, pizza and the like.

As known in the prior art, a kneading machine comprises a bowl or container adapted for receiving the dough to be kneaded, a body overhanging on the bowl, a kneading tool extending from said body inside the bowl and handling means seated into said body for moving the tool and the bowl.

These kneading machines for dough for bread making or pizza, also called bench kneading machines with fixed bowl, exhibit a bowl revolving about its axis and a kneading tool, with rotatory motion, about a single axis, such as its axis or the bowl axis, for example in direction opposite to the bowl.

In this way, by revolving around itself, the tool kneads the dough while the bowl rotation motion continuously feeds the dough to the tool, thus giving an effectively kneaded dough.

These kneading machines with revolving bowl require coupling means between the machine body and the bowl, and joints and means for driving the rotation at the machine base.

The machine therefore is heavy and bulky, especially when the kneading machine needs to be carried, for example to load the ingredients, as the same bowl is also heavy and not removable from the machine.

Moreover, these kneading machines with revolving bowl do not exhibit the highest safety guarantees in that their use involves a close contact between a revolving body as the bowl and the kneading machine's user.

A further disadvantage relates to the fact that these kneading machines with revolving bowl are not easily closable, and the coupling of the revolving bowl to optional closing or screening means is therefore complex.

On the other hand, devices are known which are called planetary mixers, with removable non-revolving bowl, and adapted for working both liquid mixtures and dough for bread making or pizza, as well as emulsions.

These planetary mixers exhibit a very large kneading tool, with size adapted for effectively mixing fluids, as described for example in document US 5,758,963.

These planetary mixers can be optionally used also for kneading dough for bread making or pizza, for example replacing the whisk with a suitable kneading tool.

However, since the bread or pizza dough is very compact and hard, at least compared to a fluid cream or an emulsion, since the tool interferes with and kneads a hard and compact lower layer, it meets with a high resistance in the operation, the kneading operation which is more critical, subjecting the device to heavy stress.

In fact, a large tool absorbs a high power for kneading a compact and hard dough as a bread or pizza dough, meeting with the risk of overloads.

In these known devices, therefore, the overloads during the kneading of hard dough, such as dough for bread making or for pizza, cause motor overheating, breakage, problems of accidental on/off.

Moreover, problems to the torque transmission system may occur, as well as breakage of the bowl support and further electrical problems to the relays and to the switches.

In the use of planetary mixers for kneading a dough for bread making or for pizza, the power applied to the tool is therefore increased, to overcome the resistance of the had dough, this implying early wear and loss of the tool, of the bowl and of the driving means functionality.

Optionally, in the use of planetary mixers for kneading a dough for bread making or for pizza, the dough is disadvantageously produced in limited quantities, compared to kneading machines for bread or pizza with revolving bowl, with a higher power consumption due to the high resistance of the dough on the large sized tool of planetary mixers.

It is thus obvious that as regards operating parameters and production rates, these planetary mixers are not specifically adapted for kneading dough for break making or for pizza.

For example, a planetary mixer with a 60 litre bowl gives 18 kg of worked dough, with a consumption of 0.12 kw power, whereas a kneading machine for bread making with revolving bowl of the same capacity gives 40 kg of dough with a consumption of 0.043 kw.

The object of the present finding is to realise a kneading machine, such as a kneading machine for dough for bread making or pizza, which should overcome the disadvantages of the kneading machines with revolving bowl, while maintaining the same production capacity of these kneading machines.

Such object is achieved by the use of a kneading machine according to claim 1.

Further details of the invention will appear more clearly from the following description, made with reference to the attached indicative non-limiting drawings, wherein:

- figure 1 shows a perspective view of a kneading machine;

- figure 2 shows a further perspective view of a kneading machine;

- figure 3 shows a section view of a kneading machine;

- figure 4 shows a top view of a kneading machine;

- figure 5 shows a perspective view of a portion of a kneading machine;

- figure 6 shows a section view of an embodiment variant of a kneading machine;

- figure 7 shows a section view of a further embodiment variant of a kneading machine;

- figure 8 shows a perspective view of the embodiment variant of figure 7;

- figure 9 shows a diagram relating to one aspect of a kneading machine according to the present invention; and

- figure 10 shows a diagram relating to a further aspect of a kneading machine according to the present invention.

Said drawings show a preferred embodiment of the invention and in particular, reference numeral 1 indicates a kneading machine, such as a kneading machine for dough for bread making or pizza.

Kneading machine 1 comprises a case or body 15, a kneading tool 3, handling means adapted for moving said kneading tool 3 and a bowl 2 or container, adapted for receiving and containing a mixture of food ingredients, such as a dough for bread making 15 or for pizza and the like.

According to an advantageous aspect of the invention, bowl 2 exhibits a first symmetry axis A.

According to an advantageous aspect of the invention, bowl 2 exhibits a first symmetry axis A.

Favourably, bowl 2 is substantially cylindrical and closed at the bottom, for example by a rounded surface.

According to an aspect of the invention, bowl 2 has a substantially circular section.

According to an embodiment of the invention, bowl 2 has a circular section.

According to a further embodiment of the invention, bowl 2 has a substantially elliptical section.

According to an embodiment of the invention, bowl 2 has an elliptical section.

Moreover, bowl 2 externally carries gripping means 25, such as two handles or knobs and the like.

Preferably, bowl 2 is removable from said kneading machine 1, that is to say, it can be extracted to load the ingredients and to remove the kneaded dough.

Favourably, moreover, case 15 comprises at least one floating head 30 and a lower portion 31 adapted for supporting said floating head 30, horizontally pivoted to one another for allowing the lifting of the floating head 30, to operate on said kneading tool 3, on said handling means and for installing and removing bowl 2 on/from kneading machine 1.

Moreover, the floating head 30 is adapted for bringing kneading machine 1 to a closed configuration.

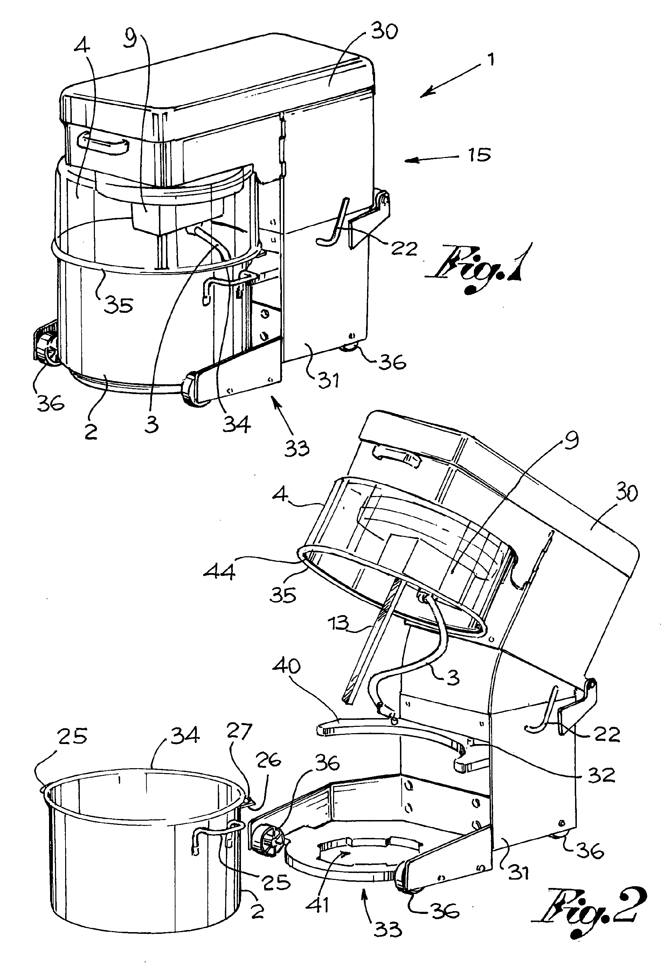

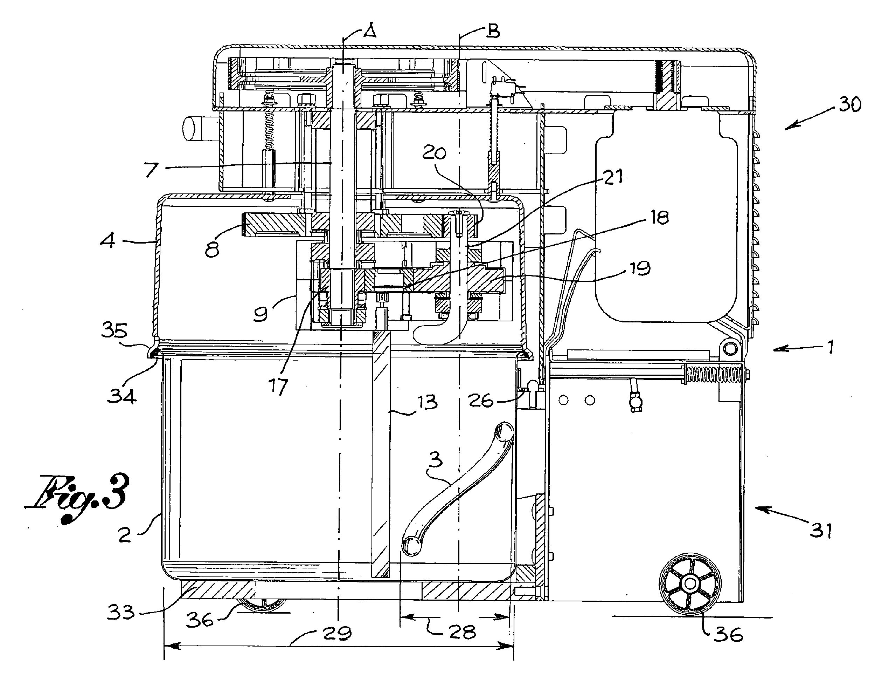

Favourably, said closed configuration is realised when said bowl 2 is installed on said kneading machine 1 and said kneading tool 3 is at least partly housed into said bowl 2 (figures 1 and 2).

Moreover, bowl 2 is fixed, that is, not revolving about the first axis A, in the closed configuration.

Moreover, bowl 2 is removable from kneading machine 1 and to this end, bowl 2 externally exhibits hooking means to body 15, such as for example hooking tangs 26 extending horizontally from bowl 2 and exhibiting, for example, a slot or a thorough hole 27, intended to couple with corresponding pin means 32 extending from a hooking plate 40 of body 15 for removably securing bowl 2 to body 15.

Favourably, the floating head 30 is substantially shaped as an upturned "L".

Moreover, the lower portion 31 comprises the hooking plate 40 and the pin means 32, adapted for coupling with said slot 27, for locking and safely securing bowl 2 into the kneading machine 1.

Moreover, the second portion 31 comprises a frame 33, extending transversally from said second portion 31 and adapted for seating bowl 2 and for allowing said bowl 2 to perform substantially restricted movements and vibrations, not dangerous for a user, when the kneading tool 3 is actuated and is moving.

For example, frame 33 exhibits a base wherein there is obtained a seat 41, adapted for realising a geometric coupling with bowl 2.

According to a preferred embodiment, the lower portion 31 comprises wheels 36 adapted for allowing the movement of kneading machine 1.

Moreover, the floating head 30 comprises screening means 4 substantially cylindrical and with the same diameter as the bowl, adapted for closing bowl 2 on top, for example by a snap or joint coupling mechanism between an upper edge 34 of bowl 2 and a lower edge 35 of screen 4.

Favourably, said screening means 4 are made of a transparent material, such as transparent and stiff polymeric material or Plexiglas.

Figure 1 shows the kneading machine 1 in said closed configuration wherein bowl 2 is installed on the kneading machine 1 and the floating head 30 allows closing bowl 2 on top by the screening means 4, whereas figure 2 shows an open configuration wherein bowl 2 is removed from the kneading machine 1 and the screening means are lifted along with the floating head 30.

Favourably, said body 15 houses and seats the handling means actuated by a motor, such as an electrical motor.

Preferably, said handling means substantially extend longitudinally from said floating head 30 of body 15.

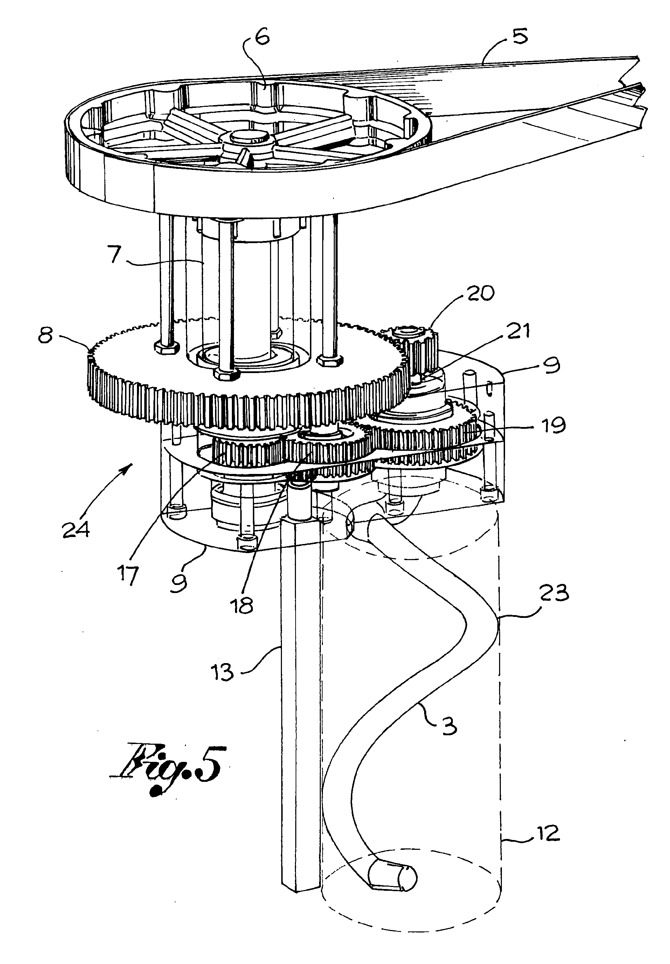

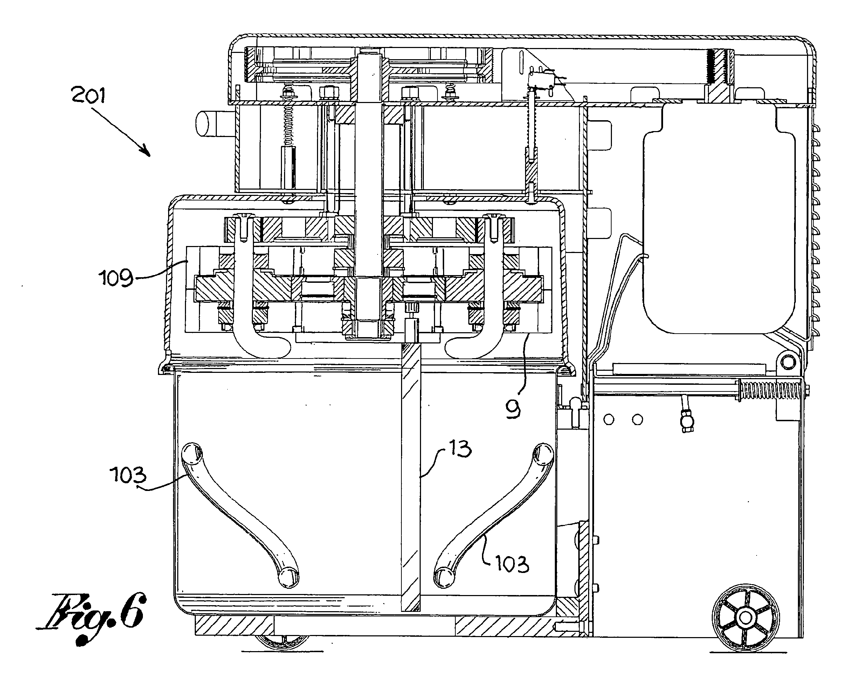

Preferably, the handling means comprise a drive belt 5 (figures 4 and 5).

Moreover, the handling means comprise a gear system comprising at least one gearing and shafts 24 adapted for imparting a revolving motion (figure 5).

Favourably, said one gearing and shafts 24 comprise a small shaft 16 revolving by the electrical motor (not shown in the figure) which actuates belt 5 in rotation.

Moreover, said one gearing and shafts 24 comprise a spoke wheel 6 placed in rotation by belt 5 (figure 5) .

Preferably, the spoke wheel 6 is keyed to a first shaft 7 and imposes a synchronous rotation to said shaft 7.

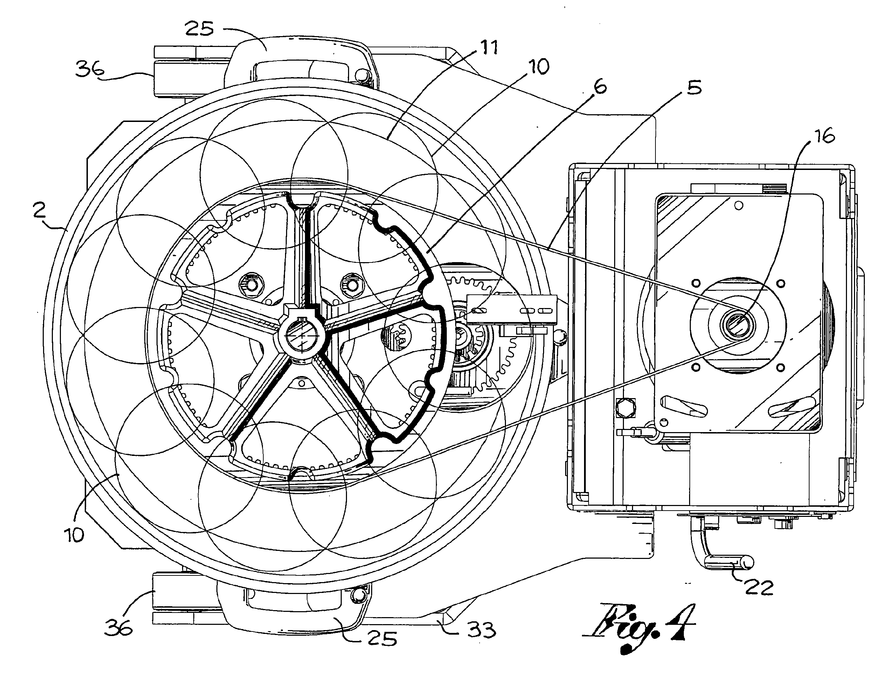

Favourably, the first shaft 7 is arranged along the first axis A of bowl 2, that is, it is coaxial to said first axis A (figure 3).

Moreover, said one gearing and shafts 24 comprise a circular toothed guide 8 keyed to the first shaft.

Favourably, moreover, the first shaft 7 imparts the synchronous rotation to a first toothed wheel 17 comprised into said one gearing and shafts 24, keyed n the first shaft 7, for example below the first toothed guide 8 (figure 5) .

Moreover, the first toothed wheel 17 transmits the rotation to an intermediate toothed wheel 18, also called guide pulley.

Moreover, said one gearing and shafts 24 comprise a second toothed wheel 19, coupled to said intermediate wheel 18, and receiving the rotation movement from it (figure 5) .

In other words, the intermediate wheel 18 is intended to transmit the rotation to the second toothed wheel 19.

According to a preferred embodiment, the first toothed wheel 17, the intermediate wheel 18 and the second toothed wheel 19 lay on the same plane.

Favourably, moreover, the second toothed wheel 19 is keyed to a second shaft 21 comprised in said one gearing and shafts 24.

Favourably, the second shaft 21 is arranged along a second axis B.

Moreover, said second shaft 21 carries a second circular toothed guide 20 keyed on top, adapted for engaging with the first toothed guide 8 (figure 5).

Preferably, the first toothed guide 8 and the second toothed guide 20 lay on the same plane, transversally to the first shaft 7 and the first axis A.

According to a preferred embodiment, the second shaft 21 carries said kneading tool 3 hooked, such as for example a reel like a hook, a whisk, a fork, a spiral and the like.

Favourably, the kneading tool 3 is hooked in underlying position relative to the second toothed wheel 17 and extends transversally from it.

The first toothed wheel 17 therefore transmits the rotation motion to the intermediate toothed wheel 18.

Moreover, the intermediate toothed wheel 18 transmits said rotation motion to the second toothed wheel 19 which in turn places the second shaft 21 and therefore the second toothed guide 20 in rotation.

It is clear that the second toothed wheel 20 engages with the first toothed guide 8 and is forced by it to follow a forced trajectory that realises a revolution motion 11 of tool 3 about shaft 7 and hence about the first symmetry axis A of bowl 2.

Preferably, said one gearing and shafts 24 are at least partly comprised in a box 9 (figure 5).

Favourably, said one gearing and shafts 24 are at least partly comprised in bowl 2 in said closed configuration (figures 1 and 3).

Favourably, box 9 revolves integrally about the first axis A and follows the kneading tool 3 in its motion (figure 4).

According to a preferred embodiment, said one gearing and shafts 24 comprise an arm or column 13 extending parallel to the first axis A into bowl 2 (figures 2,3 and 5).

Favourably, said column 13 rotates accompanied by box 9 about the first axis A.

Moreover, column 13 is a so-called pastry cutter and therefore it is adapted for mechanically acting on the dough being kneaded so as to prevent the formation of dead zones and agglomerates into the dough, that is to say, zones not worked by the kneading tool 3, and to break too large dough agglomerates.

Favourably, therefore, said one gearing and shafts 24 transmit the rotation motion from the small shaft 16 to the kneading tool 3 which revolves about axis A and about its axis B and describes a rotation 10 and revolution trajectory 11 as described in detail hereinafter (figures 3, 4 and 5) .

The kneading tool 3 therefore carries our a revolution around the first axis A and a rotation around the second axis B at the same time (figure 4).

In other words, the kneading tool 3 carries out a rotation-translatory motion about the second axis B, that is to say, the kneading tool 3 describes at the same time the circular rotation trajectory 10 about the second axis B and the substantially circular revolution trajectory 11 about the first axis A, that is, the kneading tool 3 moves by a planetary motion about the first axis A (figure 4).

Favourably, the kneading tool 3 is at least partly comprised into bowl 2, in longitudinal direction, that is, it is arranged inside bowl 2 in parallel to the first axis A, that is to say that it extends along its rotation axis B in parallel to the first axis A.

According to a preferred embodiment, in its rotation motion the kneading tool 3 defines a transversal amount of space, symmetrically to the second axis B, that is to say, at every revolution of the kneading tool 3 around the second axis B, it occupies a transversal space relative to said axis B.

In other words, an outermost point of the kneading tool 3 describes the circular rotation trajectory 10 (figure 4) about the second axis B, thus realising said transversal space occupied, where outermost point 23 means a point of tool 3 having maximum distance from axis B.

The radial distance between said outermost point 23 and the second axis B therefore is equal to the radius of the rotation trajectory 10.

Moreover, the projection of the rotation trajectory 10 defines a theoretical cylinder 12 having diameter 28, which at every moment describes the maximum transversal space occupied of the kneading tool 3, that is, the space occupied by said kneading tool 3 during its planetary motion.

In other words, by rotating around the second axis B, the surface of the kneading tool 3 generates a rotation solid whose maximum cross section has a diameter coinciding with the rotation trajectory 10, that is, with the section or base of said theoretical cylinder 12.

Favourably, the rotation trajectory 10 is a circumference.

Preferably, moreover, the revolution trajectory 11 is a circumference.

According to a preferred embodiment, ratio R is defined between diameter 28 and diameter 29 of bowl 2, where diameter 29 means the minimum width of bowl 2 relative to axis A, that is to say, the minimum distance between two points of the inside surface of bowl 2, opposed, that is, symmetrical, relative to axis A, that is, twice the minimum distance between a point of the inside surface of bowl 2 and axis A of bowl 2 (figure 3).

According to an aspect of the invention, diameter 29 is the diameter of the circular section of bowl 2.

According to a further aspect of the invention, diameter 29 is the smaller semiaxis of the elliptical section of the bowl.

Preferably, ratio R is comprised in a range of 0.20 and 0.45.

More preferably, ratio R for kneading machine 1 according to the present invention is comprised in a range between 0.25 and 0.40.

Even more preferably, ratio R is comprised in a range between 0.31 and 0.36.

According to an aspect of the invention, ratio R is 0.31.

According to a further preferred aspect of the invention, ratio R is 0.32.

Moreover, according to a further aspect of the present invention, ratio R is 0.33.

Moreover, according to a further preferred embodiment of the invention, ratio R is 0.36.

Surprisingly, in fact, it has been found that by using a ratio R comprised in a range between 0.31 and 0.36, a kneading machine 1 is obtained that exhibits the same parameters of absorbed power and maximum yield in kilograms of dough as a conventional kneading machine with revolving bowl, without having the disadvantages of revolving bowls.

Moreover, the power absorbed by kneading machine 1 using a ratio R comprised in a range between 0.31 and 0.36 is much less than that of planetary mixers, with a higher yield in terms of kneading.

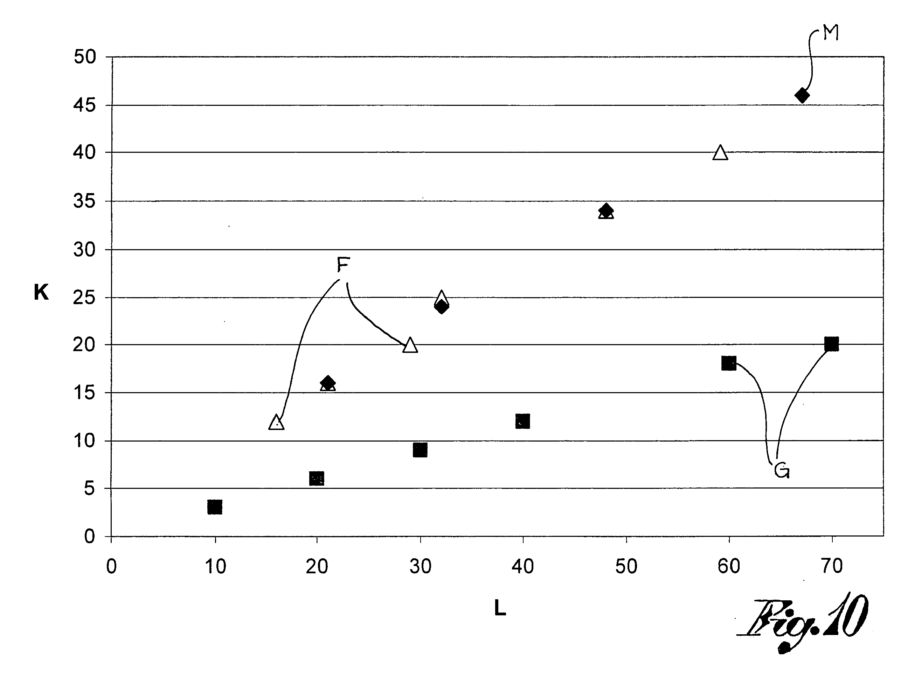

Therefore, a kneading machine 1 exhibiting a ratio R comprised in a range between 0.20 and 0.45, preferably in a range between 0.25 and 0.4 and more preferably in a range between 0.31 and 0.36, allows an increase of the production of dough and a control of the absorbed power compared to planetary mixers, and an overcoming of the disadvantages of kneading machines with revolving bowl, with amount of dough produced and absorbed power substantially equal to those of said kneading machines with revolving bowl, as is clear from the following comparative table 1 which summarises the operating parameters and yield of kneading machines and from figures 9 and 10, for kneading machines with revolving bowl, planetary mixers and kneading machine 1 according to the present invention, provided by way of a non-limiting example.

In particular, table 1 shows the values of the tool and of the bowl diameter as defined above, by way of a non-limiting example.

Table 1 also shows the value of ratio R and of the volumetric capacity L of the bowl in litres.

Finally, table 1 also shows the kilograms of kneaded dough K, the installed power value in kilowatt, that is, the power absorbed by kneading machine 1 and the power consumption in watt per kilogram of kneaded dough, provided there are no losses and leaks.

In particular, in the diagram in figure 9, R in the abscissa indicates ratio R as defined above, and W in the ordinate indicates the power consumption per kilograms of kneaded dough, provided there are no losses and leaks.

Moreover, in figure 9, C indicates the experimental points, shaped as a triangle, of consumption W on the basis of ratio R for a kneading machine with revolving bowl.

Moreover, in figure 9, D indicates the experimental points, shaped as a square, of consumption W on the basis of ratio R for a planetary mixer.

Finally, in figure 9, E indicates the experimental points, shaped as a rotated square, of consumption W on the basis of ratio R for kneading machine 1 according to the present invention.

Moreover, in figure 10, L in the abscissa indicates the volumetric capacity of the bowl in litres and K in the ordinate indicates the kilograms of kneaded dough.

Moreover, in figure 10, F indicates the experimental points, shaped as a triangle, of the kilograms of kneaded dough K on the basis of the capacity of bowl L for a kneading machine with revolving bowl.

Moreover, in figure 10, G indicates the experimental points, shaped as a square, of the kilograms of kneaded dough K on the basis of the capacity of bowl L for a planetary mixer.

Finally, in figure 10, M indicates the experimental points, shaped as a rotated square, of the kilograms of kneaded dough K on the basis of the capacity of bowl L for kneading machine 1 according to the present invention.

| | | | | | | |
|---|---|---|---|---|---|---|
| **Table 1** | | | | | | |

| **Bowl diameter (cm)** | **Tool diameter (cm)** | **R ratio** | **Bowl volume (in litres)** | **Kneaded dough (Kg)** | **Installed power (KW)** | **Kneaded dough consumption (W/Kg)** |
|---|---|---|---|---|---|---|
| **Kneading machines with revolving bowl** | | | | | | |
| 320 | 112 | 0,35 | 16 | 12 | 0,55 | 45 |
| 360 | 112 | 0,31 | 21 | 16 | 0,55 | 35 |
| 400 | 126 | 0,32 | 29 | 20 | 1,10 | 50 |
| 400 | 126 | 0,32 | 32 | 25 | 1,10 | 44 |
| 450 | 148 | 0,33 | 48 | 34 | 1,70 | 50 |
| 500 | 148 | 0,30 | 59 | 40 | 1,70 | 43 |

| **Planetary mixers** | | | | | | |
|---|---|---|---|---|---|---|
| 250 | 140 | 0,56 | 10 | 3 | 0,55 | 184 |
| 315 | 200 | 0,63 | 20 | 6 | 0,75 | 125 |
| 350 | 238 | 0,68 | 30 | 9 | 1,1 | 122 |
| 400 | 264 | 0,66 | 40 | 12 | 1,5 | 125 |
| 456 | 306 | 0,67 | 60 | 18 | 2,2 | 122 |
| 480 | 360 | 0,75 | 70 | 20 | 3 | 150 |

| **Kneading machine 1 according to the present invention** | | | | | | |
|---|---|---|---|---|---|---|
| 360 | 112 | 0,31 | 21 | 16 | 0,55 | 35 |
| 400 | 126 | 0,32 | 32 | 24 | 0,55 | 46 |
| 450 | 148 | 0,33 | 48 | 34 | 1,70 | 50 |
| 500 | 180 | 0,36 | 67 | 46 | 2,20 | 48 |

Table 1 therefore shows six examples of kneading machines with revolving bowl, six examples of planetary mixers and for examples of kneading machines according to the present invention, having different capacity of the bowl in litres, that is to say, kneading machines and mixers ranging from small to high volumetric capacity in litres of the bowl, and therefore also of kneaded dough.

From table 1 and figures 9 and 10 it can be seen that kneading machine 1 and the kneading machines with revolving bowl substantially belong to the same production class, in fact for values of ratio R comprised between 0.31 and 0.36, the power consumption in watt per kilogram of kneaded dough is substantially similar for the two types of kneading machines and in fact, as the capacity in litres of the bowl increases, also the kneaded dough increases and the two trends for kneading machine 1 and the revolving kneading machines are almost superimposable (figure 10) .

Moreover, table 1 and figures 9 and 10 show that kneading machine 1 and the planetary mixers are machines that belong to very different classes, since the working range of ratio R is very far for the two machines (figure 9) and the power consumption for produced dough is very different, in fact planetary mixers use a ratio R ranging from 0.56 to 0.75, with amount of produced dough ranging from 3 to 20 kilograms and with a power consumption for produced dough ranging from 122 to 184 watt per kilogram of kneaded dough, whereas kneading machine 1 according to the present invention has a range of the preferred ratio R from 0.31 to 0.36, with amount of produced dough ranging from 16 to 46 kilograms and with a power consumption for produced dough ranging from 35 to 50 watt per kilogram of kneaded dough.

Moreover, from figure 10 and table 1, by comparing planetary mixers and kneading machine 1 with bowl having similar capacity, it can be deducted that kneading machine 1 has a considerably higher yield of kneaded dough, with a power consumption per kilogram of kneaded dough which is significantly lower.

Moreover, it is evident that the range in which ratio R is comprised in planetary mixers is very high, as it ranges from 0.56 for "small" bowls and high absorbed power, to 0.75 for "large" bowls and also high absorbed power, whereas for kneading machine 1, the range of ratio R is more preferred as it is comprised between 0.31 and 0.36, which is certainly restricted and allows a surprisingly higher production of dough and a considerable reduction of absorbed power per kilogram of produced dough.

Based on table 1 and on figures 9 and 10 it is therefore clear that ratio R in the range between 0.20 and 0.45 allows obtaining a kneading machine 1 exhibiting a significantly lower power consumption per produced or kneaded dough compared to planetary mixers.

In particular, ratio R comprised in the range between 0.31 and 0.36 is preferred among the ranges as it is the right compromise between dough kneading efficacy and power absorbed by the kneading machine 1.

In fact, the experimental data in table 1 and figured 9 and 10 are interpreted based on the fact that, when ratio R is less than 0.20, tool 3 has a very small diameter, exhibits and develops a restricted occupied space and useful surface for the dough during its planetary motion and therefore a tool thus realised is capable of working and kneading a reduced amount of dough.

Therefore, with a ratio R lower than 0.20, the kneading machine works and develops little and not much effectively the dough.

On the other hand, a kneading machine 1 with ratio R higher than 0.45 has a tool 3 with large diameter and develops and develops a very large occupied space and useful dough surface in its planetary motion; in this way, the effect of the dough hardness and compactness and its friction upon the planetary motion of tool 3, which are chemical-physical characteristics of the dough, is much increased as the required power is increased, with consequent problems of mechanical wear and in any case, with a reduction of the produced dough.

For a ratio R higher than 0.45, the increase of the absorbed power due to the larger diameter of tool 3 and to the hardness and compactness of the dough therefore significantly reduces the amount of produced dough while increasing the ratio between power consumption per kilograms of produced dough, resulting in a very disadvantageous and ineffective kneading machine for the production of dough for bread making, for pizza and the like.

It is therefore unavoidable that the performance of a kneading machine with ratio R exceeding 0.45 is similar to that of planetary mixers, resulting in little kneaded dough and high power consumption.

The operation of kneading machine 1 described above is intuitive.

After putting the ingredients in bowl 2 and hooking the kneading tool 3 to the second shaft 21, said bowl 2 is installed on the kneading machine 1, securing it by the tangs 26 to the pin means 32 thus realising the closed configuration closing bowl 2 by screen 4 with the rotation of floating head 30 (figures 1 and 2).

Afterwards, an actuating means 22 is operated, such as a lever or a knob defining at least one "on" condition and one "off" condition for the electrical motor, for moving the handling means and said at least one gearing and shafts 24 and thus realising the planetary motion of the kneading tool 3 for kneading the dough for bread making or for pizza as described.

Advantageously, bowl 2 is fixed, that is, is not revolving about the first axis A, during the dough kneading, thus allowing the safe closing of bowl 2 by the screening means 4 and allowing an operator to use the kneading machine 1 safely, avoiding operations in contact with a revolving body.

According to a further advantageous aspect of the present invention, the fixed bowl 2, that is, not revolving, allows closing in a substantially sealed manner, the bowl 2 by screen 4, thus avoiding the accidental introduction in the dough of foreign matter, such as dust, insects and the like and therefore ensuring the cleanliness of the dough.

Advantageously, the fixed bowl 2 allows considerably reducing the weight of kneading machine 1, as in fact it does not need heavy and bulky coupling and rotation transmission means.

Advantageously, moreover, the fixed bowl 2 avoids problems related to a "balking" between the kneading tool 3 and the same bowl 2, that is to say that the fixed bowl 2, that is, not rotating, avoids the disadvantage of current kneading machines with rotating bowl caused by the opposed direction of rotation between the same bowl and the tool.

Moreover, the fixed bowl 2 does not need heavy coupling means and systems for rotating, thereby providing a lighter kneading machine 1, more compact, handy and portable and also allows an easy removal of bowl 2 from kneading machine 1.

Moreover, ingredients are more easily loaded into the fixed bowl 2 removed from the kneading machine, such as water, flour and the like, and then it is installed again on kneading machine 1 by the hooking tangs 26.

Advantageously, wheels 36 applied to kneading machine 1 are further adapted for facilitating its movement.

It is clear that a kneading machine 1 thus realised is advantageously portable as not heavy while being compact.

Moreover, it is advantageous to provide kneading machine 1 with a kneading tool 3 and a bowl 2 unusually having the ratio R, as defined above, comprised in a range between 0.20 and 0.45, preferably between 0.25 and 0.40, more preferably 0.31 and 0.36.

In fact, with such ratio R, the resulting kneading machine exhibits performance substantially equal to that of current kneading machines with rotating bowl specific for dough for bread or pizza and the like, with all the advantages arising from having a fixed bowl 2 as mentioned above.

Moreover, a smaller diameter tool allows kneading a compact and hard dough as a bread or pizza dough, with lower effort and friction between tool and dough, thus causing less wear of the driving means.

A further advantageous aspect is related to the fact that the planetary motion of the kneading tool 3 carries out at the same time the functions of kneading the dough, mainly with the rotatory motion 10 of the kneading tool 3 about its axis B, and of feeding the same dough to the kneading tool 3, mainly by the revolution trajectory 11 about axis A.

Unusually, therefore, kneading machine 1 exhibits the same operating parameters of absorbed power of a kneading machine for bread making with revolving bowl as the revolution motion 11 performs the function of feeding the dough to tool 3, and therefore the number of revolutions per minute of tool 3 about axis A is equal to the number of revolutions of a rotating bowl of a known kneading machine belonging to the same production class.

Advantageously, moreover, it is possible to increase the amount of kneaded dough keeping the power absorbed by the electrical motor constant or even reducing it, improving the productivity of kneading machine 1. compared to planetary mixers.

An advantageous aspect of the present invention compared to planetary mixers therefore is that the lower power required allows increasing the operating life of the handling means, of the kneading tool 3, of bowl 2 and of gearing and shafts 24, as they are subject to less intense stresses, without decreasing the yield in dough for bread making or pizza.

Advantageously, moreover, the yield in dough for bread making or for pizza increases and the applied power decreases compared to planetary mixers.

Another advantageous aspect is the smaller weight due to the lower installed power compared to planetary mixers, which makes the kneading machine even more portable and compact.

It is clear that a man skilled in the art, in order to meet specific and incidental needs, can make several changes and variants to kneading machine 1 according to the present invention, all falling within the scope of protection as defined in the following claims.

For example, in an optional embodiment variant, reference numeral 201 indicates a kneading machine carrying two or more kneading tools 103 adapted for moving by planetary motion, totally similar to the kneading tool 3 described above.

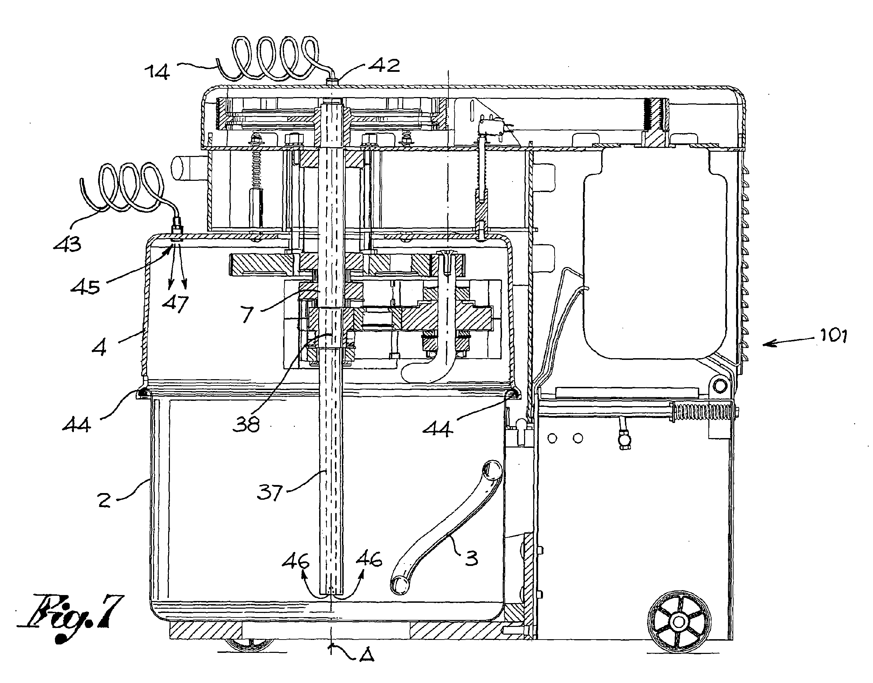

Any further kneading tool 103 is associated to a driving system contained in a driving box 109, which comprises its own gears 18, 19, 20 and its own shaft 21, which carry out the rotation of the tool about its own axis and axis A of bowl 2, that is to say, the planetary motion (figure 6).

Advantageously, therefore, the presence of a plurality of kneading tools 103 equal to one another, for example two kneading tools 103, allows kneading the same amount of dough more quickly compared to the use of a single tool.

According to an advantageous aspect of the embodiment variant of the present invention, the time needed for kneading the dough is substantially halved with the use of two kneading tools 103, thus giving a further advantage in terms of time saving.

According to a further aspect of the present invention, the closed bowl 2 is adapted for allowing the formation of a conditioned or modified environment by fluids emitted by blowing means 14, such as a gas, cold or conditioned air, nitrogen or carbon dioxide.

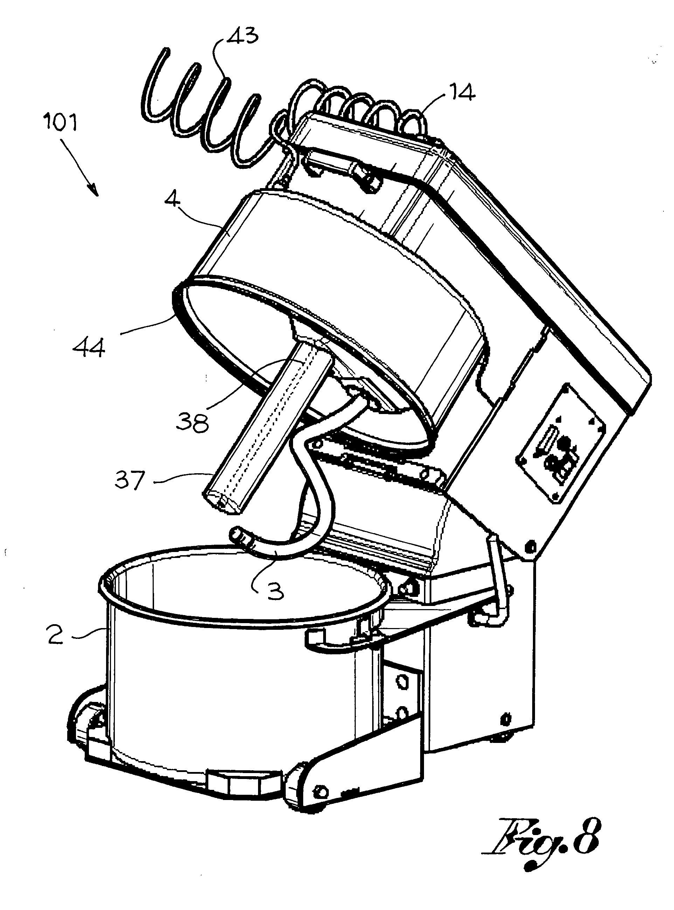

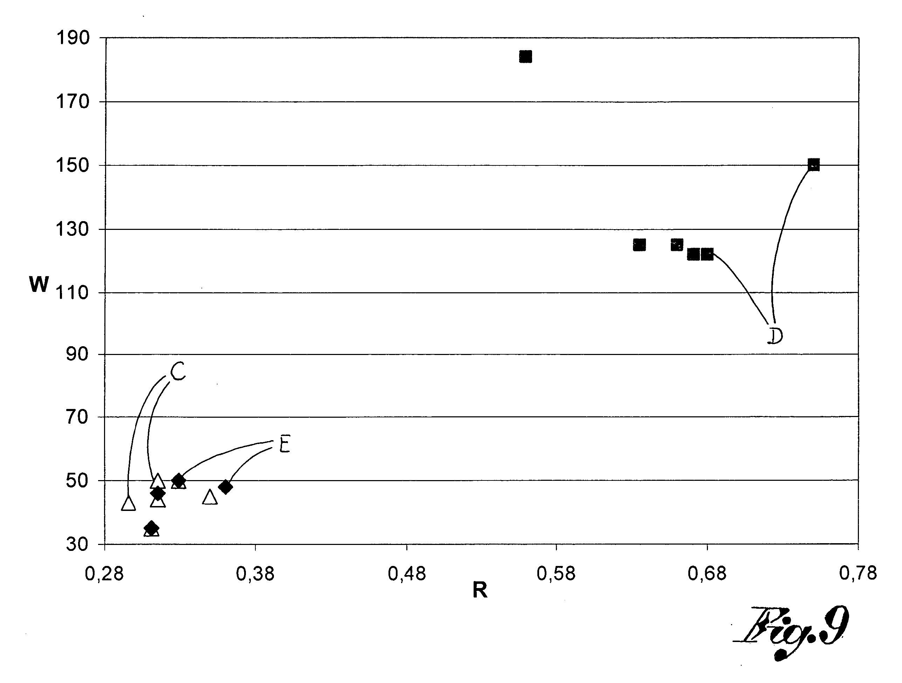

In particular, reference numeral 101 indicates a kneading machine comprising blowing means 14 adapted for providing inside bowl 2, sealed by screen 4, for example provided with sealing means 44 acting on the upper edge 34 of bowl 2, a continuous flow of a fluid as indicated by arrows 46, such as cold or conditioned air, or another gas, such as carbon dioxide or nitrogen, adapted for conditioning or modifying the environment of bowl 2, for example decreasing the temperature of the kneaded dough (figures 7 and 8).

Preferably, the blowing means comprise at least one duct 14 for feeding the refrigerating fluid coming from a refrigeration unit (not shown).

Moreover, said duct 14 is in fluid communication, for example by turnable unions 42, with an axis hole 38 for the passage of the fluid and obtained in shaft 7.

Moreover, the axial hole 38 is in fluid communication with a piping 37 (see figure 7, 8), extending along axis A inside bowl 2, preferably up to the proximity of the rounded bottom of bowl 2, and adapted for conveying the fluid inside bowl 2 for cooling the dough, as shown by arrows 46.

According to a preferred embodiment, the blowing means comprise a second duct 43 for feeding the cooling fluid, as shown by arrows 47, communicating with the interior of bowl 2 through a thorough hole 45 obtained in screen 4.

Advantageously, conditioning the inside environment of bowl 2 allows conditioning and regularising the profile of temperatures when kneading the dough, avoiding sudden changes and peaks of temperature which are harmful for the dough as they could trigger undesired reactions, such as early activity of the yeasts with consequent production of gas or excessive development of gluten.

A further advantageous aspect of the presence of the air blowing means is that the dough oxygenation is improved and facilitated, which results in a positive and improvement factor for the volumetric development of the dough.

According to a further advantageous aspect, the presence of piping 37 and of the second duct 43 allows cooling the dough from bottom and from top, respectively, as shown by arrows 46 and 47, and thereby a more even distribution of the cooling fluid, with more uniform cooling of the kneaded dough.

## Claims

1. Kneading machine (1, 101, 201) for food products, in particular for a dough for bread making or for pizza and the like, comprising a bowl (2) having substantially circular section adapted for containing said dough, at least one kneading tool (3), capable of rotating at the same time about a first axis (A) of bowl (2) and about his one second axis (B), so as to realise a planetary motion, wherein an outermost point (23) of said tool (3) defines a circular rotation trajectory (10) about said second axis (B), and wherein the ratio (R) between the diameter (28) of said rotation trajectory (10) and the diameter (29) of said bowl (2) is predetermined, said ratio R being comprised in a range between 0.20 and 0.45 .

2. Kneading machine (1, 101, 201) according to claim 1, wherein said ratio (R) is comprised in a range between 0.25 and 0.4 .

3. Kneading machine (1, 101, 201) according to claim 1 or 2, wherein said ratio (R) is comprised in a range between 0.31 and 0.36 .

4. Kneading machine (1, 101, 201) according to any one of the previous claims, wherein said ratio (R) is 0.31 .

5. Kneading machine (1, 101, 201) according to any one of claims from 1 to 3, wherein the ratio (R) is 0.32 .

6. Kneading machine (1, 101, 201) according to any one of claims from 1 to 3, wherein the ratio (R) is 0.33 .

7. Kneading machine (1, 101, 201) according to any one of claims from 1 to 3, wherein the ratio (R) is 0.36 .

8. Kneading machine (1, 101, 201) according to any one of the previous claims, wherein said bowl (2) is fixed relative to said first axis (A).

9. Kneading machine (1, 101, 201) according to any one of the previous claims, comprising screening means (4) adapted for closing said bowl (2).

10. Kneading machine (1, 101, 201) according to claim 9, wherein said screening means (4) are adapted for tightly closing said bowl (2), sealing said bowl (2) by sealing means (44) acting on the upper edge (34) of the bowl (2) .

11. Kneading machine (1, 101, 201) according to claim 9 or 10, wherein said screening means (4) are made of a transparent material.

12. Kneading machine (101) according to any one of the previous claims, comprising means for blowing a fluid inside said bowl (2).

13. Kneading machine (101) according to claim 12, wherein said fluid is a conditioning gas, such as cold or conditioned air, carbon dioxide or nitrogen, adapted for realising a cooled or conditioned environment inside the bowl and for decreasing the temperature of said dough.

14. Kneading machine (101) according to claim 12 or 13, wherein said blowing means comprise at least one feeding duct (14) for said fluid, at least one axial hole (38) obtained in said shaft (7), at least one turnable union (42) and an extension piping (37).

15. Kneading machine (101) according to any one of claims from 12 to 14, wherein such blowing means comprise at least one second duct (14) for feeding said conditioning fluid, communicating with the interior of said bowl (2) through a thorough hole (45) obtained in said screening means (4).

16. Kneading machine (1, 101, 201) according to any one of the previous claims, comprising a body (15) adapted for seating handling and transmission means.

17. Kneading machine (1, 101, 201) according to claim 16, wherein said body (15) comprises a floating head (30) adapted for bringing said kneading machine (1, 101, 201) in a closed configuration, wherein said bowl (2) is installed on said kneading machine (1) and said kneading tool (3) is at least partly seated into said bowl (2), and a lower portion (31) adapted for supporting said floating head (30) .

18. Kneading machine (1, 101, 201) according to claim 17, wherein said floating head (30) is substantially shaped as an upturned "L".

19. Kneading machine (1, 101, 201) according to any one of claims from 16 to 18, wherein said handling means comprise a belt (5), such as a drive belt.

20. Kneading machine (1, 101, 201) according to any one of claims from 16 to 19, wherein said handling means comprise at least one gearing and shafts (24) adapted for transmitting a rotation impulse.

21. Kneading machine (1, 101, 201) according to claim 20, wherein said at least one gearing and shafts (24) comprise at least one small shaft (16), rotating by said electrical motor, adapted for actuating said belt (5) in rotation.

22. Kneading machine (1, 101, 201) according to claim 20 or 21, wherein said at least one gearing and shafts (24) comprise a spoke wheel (6), adapted for pulling said belt (5) in rotation.

23. Kneading machine (1, 101, 201) according to claim 22, wherein said spoke wheel (6) is keyed to a first shaft (7) arranged along said first axis (A).

24. Kneading machine (1, 101, 201) according to claim 23, wherein said spoke wheel (6) is adapted for imposing a synchronous rotation to said first shaft (7) about said first axis (A).

25. Kneading machine (1, 101, 201) according to claim 23 or 24, wherein said at least one gearing and shafts (24) comprise a circular toothed guide (8), keyed to said first shaft (7).

26. Kneading machine (1, 101, 201) according to claim 25, wherein said first shaft (7) is adapted for transmitting a synchronous rotation to a first toothed wheel (17), keyed to said first shaft (7) and below said first toothed guide (8) .

27. Kneading machine (1, 101, 201) according to claim 26, wherein said first toothed wheel (17) is adapted for transmitting said rotation to an intermediate toothed wheel (18) .

28. Kneading machine (1, 101, 201) according to claim 20, wherein said at least one gearing and shafts (24) comprise a second toothed wheel (19), coupled to said intermediate wheel (18) and receiving said rotation from it.

29. Kneading machine (1, 101, 201) according to claim 27 or 28, wherein said first toothed wheel (17), said intermediate toothed wheel (18) and said second toothed wheel (19) lay on the same plane.

30. Kneading machine (1, 101, 201) according to claim 28 or 29, wherein said at least one gearing and shafts (24) comprise a second shaft (21), keyed to said second toothed wheel (19).

31. Kneading machine (1, 101, 201) according to claim 30, wherein said second shaft (21) is arranged along said second axis (B).

32. Kneading machine (1, 101, 201) according to claim 31, wherein said second shaft (21) carries a second circular toothed guide (20) keyed on top, adapted for engaging on said first toothed guide (8) .

33. Kneading machine (1, 101, 201) according to claim 32, wherein said first toothed wheel (8) and said second toothed wheel (20) lay on the same plane transversal to said first shaft (7) and to said first axis (A).

34. Kneading machine (1, 101, 201) according to any one of claims from 20 to 33, wherein said at least one gearing and shafts (24) are at least partly comprised into said bowl (2), when said bowl is installed on said kneading machine (1) in said closed configuration.

35. Kneading machine (1, 101, 201) according to any one of claims from 30 to 34, wherein said second shaft (21) carries said kneading tool (3), such as a reel, for example a hook, a whisk, a shield, a spiral and the like, hooked to it.

36. Kneading machine (1, 101, 201) according to claim 35, wherein said kneading tool (3) is hooked to said second shaft (21), in underlying position relative to said second toothed wheel (17) and extends transversally from it, parallel to said first axis (A).

37. Kneading machine (1, 101, 201) according to any one of claims from 20 to 36, wherein said at least one gearing and shafts (24) are at least partly comprised in a box (9).

38. Kneading machine (1, 101, 201) according to claim 37, wherein said box (9) rotates around the first axis (A) and integrally follows said kneading tool (3) in its revolving motion.

39. Kneading machine (1, 101, 201) according to any one of claims from 20 to 38, wherein said at least one gearing and shafts (24) comprise a column (13) extending parallel to said first axis (A), inside said bowl (2) in said closed configuration and rotating integrally to said box (9) about said axis (A).

40. Kneading machine (1, 101, 201) according to claim 39, wherein said column (13) is adapted for mechanically acting on said dough being kneaded so as to prevent the formation of dead zones in said dough, that is to say, zones not effectively worked by said kneading tool (3), and to break too large dough agglomerates.

41. Kneading machine (1, 101, 201) according to any one of claims from 17 to 40, wherein said floating head (30) comprises said screening means (4).

42. Kneading machine (1, 101, 201) according to any one of claims from 16 to 41, wherein said floating head (30) comprises said kneading tool (3).

43. Kneading machine (1, 101, 201) according to any one of the previous claims, wherein said tool (3) described a circular revolution trajectory (11) about said first axis (A).

44. Kneading machine (1, 101, 201) according to any one of the previous claims, wherein said bowl (2) is removable from said kneading machine (1), it being adapted for loading ingredients and removing said kneaded dough.

45. Kneading machine (1, 101, 201) according to any one of the previous claims, wherein said bowl (2) externally comprises at least two gripping means (25) such as two handles or knobs and the like.

46. Kneading machine (1, 101, 201) according to any one of claims from 16 to 45, wherein said bowl (2) comprises hooking means to said body (15) such as for example hooking tangs (26).

47. Kneading machine (1, 101, 201) according to claim 46, wherein said hooking tangs (26) comprise a slot or a thorough hole (27) intended to realise a releasable coupling between said hooking tangs (26) of said bowl (2) to corresponding pin means (32), adapted for removably securing said bowl (2) to said body (15).

48. Kneading machine (1, 101, 201) according to any one of claims from 17 to 47, wherein said bowl (2) is secured to said body (15) in said closed configuration.

49. Kneading machine (1, 1.01, 201) according to claim 47 or 48, wherein said lower portion (31) comprises a hooking plate (40) carrying said pin means (32), adapted for coupling with said at least one slot (27), for locking and safely securing the bowl (2) into the kneading machine (1).

50. Kneading machine (1, 101, 201) according to any one of claims from 17 to 49, wherein said second portion (31) comprises a frame (34) extending transversally from said second portion (31) and adapted for seating and keeping into position said bowl (2).

51. Kneading machine (1, 101, 201) according to claim 50, wherein said frame (33) exhibits a base wherein there is obtained a seat (41), adapted for realising a geometric coupling with said bowl (2).

52. Kneading machine (201) according to any one of the previous claims, comprising a plurality of kneading tools (103) adapted for moving by planetary motion inside the bowl (2) and a driving box (109) adapted for realising said planetary motion.

53. Kneading machine (101) for food products, in particular for a dough for bread making or for pizza and the like, comprising a bowl (2) having circular section adapted for containing said dough, at least one kneading tool (3), capable of rotating at the same time about a first axis (A) of bowl (2) and about his one second axis (B), so as to realise a planetary motion, and blowing means adapted for conveying a conditioning fluid inside said bowl (2).

54. Kneading machine (101) according to claim 53, comprising a shaft (7) extending along said first axis (A) and adapted for realising said planetary motion of the kneading tool (3), wherein said blowing means comprise at least one feeding duct (14) of said fluid to said kneading machine (1) and at least one axial hole (38) for the passage of said fluid inside said bowl (2), obtained in said first shaft (7) and communicating with said feeding duct (14).

55. Kneading machine (101) according to claim 54, wherein said blowing means comprise at least one turnable union (42) for connecting said duct (14) to the shaft (7) and a piping (37) adapted for conveying said fluid from said axial hole (38) to the bottom of said bowl (2).

56. Kneading machine (101) according to any one of claims from 53 to 55, wherein such blowing means comprise at least one second duct (14) for feeding said conditioning fluid, communicating with the interior of said bowl (2) and adapted for blowing said fluid from top inside said bowl (2).

57. Kneading machine (101) according to any one of claims from 53 to 56, comprising screening means (4) adapted for closing said bowl (2) on top.

58. Kneading machine (101) according to claim 57, wherein said screening means (4) are associated to sealing means (44) adapted for sealingly close said bowl (2).

59. Kneading machine (101) according to claim 57 or 58, wherein said at least one second duct (43) communicates with the interior of said bowl (2) through a thorough hole (45) obtained in said screening means (4).

60. Kneading machine (101) according to any one of claims from 53 to 59, wherein an outermost point (23) of said tool (3) defines a circular rotation trajectory (10) around said second axis (B), and wherein said R the ratio between the diameter (28) of said rotation trajectory (10) and the diameter (29) of said bowl (2), the ratio (R) is comprised in a range between 0.45 and 0.20, preferably in a range between 0.25 and 0.4 and more preferably in a range between 0.31 and 0.36 .

61. Conditioning method of a dough for bread making or pizza, comprising the steps of:
- arranging said dough into a bowl (2) of a kneading machine (101);
- blowing a conditioning fluid in the proximity of the bottom of said bowl (2), by a first feeding duct 25 of said fluid;
- blowing said conditioning fluid in the proximity of the top side of said bowl (2) through a second feeding duct.

62. Method according to claim 61, wherein there is provided a sealed closure of said bowl (2) prior to steps of blowing said conditioning fluid.
